# FASCICULE DE BREVET EUROPEEN

(11) **EP 1 734 137 B1**
(45) Date de publication et mention de la délivrance du brevet: **23.03.2011**
(21) Numéro de dépôt: 06447052.9
(22) Date de dépôt: 12.04.2006
(51) Int. Cl.: C22B 1/20

(54) **Procédé d'agglomération de minerais de fer avec suppression totale d'émissions polluantes vers l'atmosphère**
Agglomerationsverfahren von Eisenerzen mit totaler Unterdrückung von Schadstoffemissionen zur Atmosphäre
Process of agglomeration of iron ores with a total suppression of polluting emissions towards the atmosphere

(30) Priorité: 17.06.2005 BE 20050309
(43) Date de publication de la demande: 20.12.2006
(73) Titulaire: CENTRE DE RECHERCHES METALLURGIQUES asbl - CENTRUM VOOR RESEARCH IN DE METALLURGIE vzw, 1050 BRUXELLES (BE)
(72) Inventeur: Vanderheyden, Bernard, 4170 Comblain-au-Pont (BE); Munnix, René, 4651 Battice (BE)
(74) Mandataire: pronovem

(56) Documents cités:
- CH-A- 297 328
- DE-C1- 4 411 505
- US-A- 5 476 533
- DATABASE WPI Section Ch, Week 197745 Derwent Publications Ltd., London, GB; Class M24, AN 1977-80393Y XP002366330 & JP 52 116703 A (NIPPON STEEL CORP) 30 septembre 1977 (1977-09-30)
- DATABASE WPI Section Ch, Week 197745 Derwent Publications Ltd., London, GB; Class M24, AN 1977-80392Y XP002366331 & JP 52 116702 A (NIPPON STEEL CORP) 30 septembre 1977 (1977-09-30)

## Description

### Objet de l'invention

La présente invention se rapporte à des améliorations du procédé d'agglomération de minerais de fer sur grille mobile, dans le domaine de la sidérurgie. L'intérêt majeur de ces améliorations réside en une mise en oeuvre du procédé avec suppression totale ou quasi-totale du rejet d'émissions gazeuses polluantes dans l'atmosphère.

### Etat de la technique

Le processus d'agglomération à haute température sur bande du minerai de fer, en vue de transformer celui-ci en une substance pouvant servir comme charge d'alimentation des hauts-fourneaux, est connu depuis longtemps et il est largement répandu dans le monde.

Il consiste principalement à déposer sur une bande mobile une charge constituée, pour l'essentiel, d'un mélange de minerais de fer et de combustible solide, généralement du poussier de coke ou du charbon, à enflammer cette charge à sa surface supérieure et à aspirer de l'air au travers de la charge pour faire progresser la combustion dans toute l'épaisseur de la couche formée par la charge sur la bande. En fin d'opération, on obtient un gâteau aggloméré qui, après concassage et criblage, constitue une charge de qualité pour le haut-fourneau.

La combustion du poussier de coke ou du charbon génère un débit de fumées important et fortement chargé en polluants tels que poussières, monoxyde de carbone, monoxyde d'azote, dioxyde de soufre, polluants organiques volatils et semi-volatils, en particulier des dioxines et des furannes.

Pour satisfaire aux normes environnementales toujours plus strictes, il est de plus en plus souvent nécessaire d'avoir recours à des techniques coûteuses de dépollution des fumées, qui engendrent des surcoûts excessifs vu l'importance du flux de fumées à traiter (typiquement 1800 à 2000 Nm³ par tonne d'aggloméré produit).

Le recyclage d'une partie des fumées à travers la charge à agglomérer est une technique de plus en plus répandue, décrite par exemple dans les documents DE-C-44 11 505, CH-A-297328, JP-A-51 120905, US-A-4,536,211, US-A-4,023,960, etc. Cette technique présente le triple avantage suivant :
- destruction "in situ" ou captation de certains polluants pendant leur recyclage à travers la charge (e.a. postcombustion du CO et des polluants organiques, réduction partielle des NOₓ, filtration des poussières) ;
- réduction significative du volume résiduel à traiter, avant rejet à l'atmosphère, et donc forte réduction du coût de la dépollution "end-of-pipe" le jour où celle-ci s'avérera nécessaire ;
- récupération directement dans la charge de la chaleur sensible et latente des fumées recyclées, ce qui se traduit par une moindre consommation de combustible solide, d'où également une formation moindre de SOₓ, le combustible solide étant généralement la source principale de soufre dans le procédé.

Il existe plusieurs variantes industrialisées de la technique du recyclage des fumées de combustion ; on peut par exemple citer le procédé EOS *(Emission Optimized Sintering*) développé par Lurgi et appliqué chez Corus (IJmuiden, Pays-Bas) et le procédé LEEP *(Low Emission and Energy optimized sintering Process)* développé par HKM pour sa propre chaîne d'agglomération (Hückingen, Allemagne).

Le procédé EOS consiste en un recyclage non sélectif d'une partie (± 50%) de l'ensemble des fumées, le but étant dans ce cas plutôt de réduire le plus possible le volume de gaz résiduel en vue d'une diminution du coût de son traitement "end-of-pipe", bien qu'il résulte intrinsèquement en une certaine réduction de la plupart des émissions polluantes (dont SOₓ, NOₓ, dioxines et furannes).

Dans le cas du procédé LEEP, il s'agit du recyclage sélectif des fumées de fin de cuisson, les plus chaudes et les plus polluées. Cela permet en théorie d'obtenir un taux de dépollution intrinsèque plus élevé que dans le cas du procédé EOS ; en particulier une plus grande proportion de dioxines est recyclée et détruite dans le front de flamme. Le procédé nécessite néanmoins un échange de chaleur permettant de réchauffer les fumées non recyclées à l'aide des fumées à recycler pour assurer un fonctionnement correct des électrofiltres, éviter des problèmes de corrosion et maintenir une température suffisante de rejet à la cheminée.

Mais le recyclage des fumées présente également des inconvénients non négligeables : chute de la productivité et de la qualité du produit (aggloméré) dès que la teneur en oxygène à l'entrée de la charge chute en dessous d'un certain seuil (15 à 18% selon le cas). La teneur en oxygène diminuant au fur et à mesure que l'on augmente le taux de recyclage des fumées, on est en pratique contraint à limiter ce taux de recyclage bien en dessous de son maximum théorique pour maintenir des performances d'agglomération acceptables. Le taux de recyclage effectivement appliqué varie alors entre 20 et 50%, alors qu'en théorie, il pourrait être poussé bien au-delà (70 à 80% selon les cas). La limite théorique, en régime établi, résulte de la nécessité de réaliser l'apport en oxygène frais nécessaire à la combustion, d'assurer une évacuation équivalente des produits de combustion, mais aussi de l'obligation d'évacuer le surplus de fumées générées. Le flux sortant est en effet supérieur au flux entrant du fait de l'évaporation de l'eau de la charge, de la calcination des hydrates et des carbonates, libérant respectivement de la vapeur d'eau et du dioxyde de carbone, ainsi que de débits plus ou moins importants d'entrée d'air parasite dans les circuits d'aspiration.

L'injection d'oxygène pur ou technique dans les fumées recyclées ou dans l'air d'appoint ou encore dans le gaz aspiré à travers la charge à agglomérer, après mélange des fumées recyclées et de l'air d'appoint, permet de maintenir la teneur en oxygène au sein de la charge à un niveau suffisant pour conserver des performances d'agglomération acceptables. Cela permet aussi - à performances égales - d'augmenter le taux de recyclage des fumées, grâce à la réduction du ballast d'azote amené par l'air, aspiré en quantité moindre dans le cas où on a recours à une suroxygénation du gaz aspiré. Mais cela coûte très cher, d'autant plus qu'une part non négligeable (~30%) de l'oxygène injecté est purement et simplement rejeté à la cheminée avec le reste du flux gazeux résiduel sans avoir servi à la combustion.

Une autre problématique qu'il convient dorénavant de prendre en compte est celle des émissions de gaz à effet de serre. Le recyclage des fumées tel que pratiqué aujourd'hui permet de réduire au prorata de l'économie d'énergie, c'est-à-dire d'environ 10 à 15%, l'émission spécifique, définie comme étant l'émission par tonne d'aggloméré, de dioxyde de carbone (CO₂). Mais l'élimination totale, ou du moins poussée, du CO₂ dans ces conditions par une décarbonatation du flux de fumées résiduel n'est guère envisageable. En effet, grâce au recyclage, le pourcentage volumique en CO₂ dans les fumées augmente de ± 5 % à ± 10%, mais cela reste bien insuffisant pour une application économiquement viable des techniques de capture du CO₂ existantes.

Le document JP-A-52 116 703 divulgue un procédé d'agglomération de minerais de fer sur bande, dans lequel la concentration de l'oxygène aspiré au travers de la charge est contrôlée dans un intervalle de 17 à 50%. Une partie des gaz collectés sous la charge est recyclée, le reste étant purgé et traité pour enlever l'eau et le gaz carbonique, le gaz traité étant ensuite injecté aux tuyères d'un haut-fourneau, sans déperdition dans l'atmosphère. A mesure que la proportion d'oxygène augmente dans le gaz, l'efficacité de l'oxygène utilisé augmente également. Ainsi, la quantité d'oxygène requise par tonne de produit fini augmente à peine et la quantité de fumées produites diminue. En outre, la concentration en CO₂ dans les fumées augmente en même temps que l'augmentation de productivité, de sorte que l'élimination du CO₂ par tonne de produit fini est réalisée à coût relativement faible.

Le document JP-A-52 116 702 divulgue un procédé d'agglomération de minerais de fer sur bande, dans lequel de l'oxygène ou un gaz contenant de l'oxygène est ajouté au gaz comburant aspiré au travers de la charge, pour contrôler la concentration en CO₂ dans les fumées collectées sous la charge, dans un intervalle de 25 à 60%, et la concentration en CO₂+H₂O dans un intervalle de 25 à 75%. Les fumées collectées sont recyclées et réinjectées à l'entrée avec le gaz comburant après passage dans un four de conversion de gaz en vue de décomposer les oxydes d'azote et de réaliser une désulfurisation.

### Buts de l'invention

La présente invention vise à fournir une solution permettant de s'affranchir des inconvénients de l'état de la technique.

En particulier, le but de l'invention est de pousser le taux de recyclage des fumées bien au-delà de ce qui se fait selon l'état de la technique, et notamment de supprimer totalement ou presque totalement, et ce de manière économiquement intéressante, les émissions polluantes résiduelles dans l'atmosphère, y compris le CO₂ si nécessaire.

La présente invention doit également permettre d'éviter totalement les effets négatifs d'un taux élevé de recyclage des fumées sur les performances du procédé d'agglomération.

### Principaux éléments caractéristiques de l'invention

Un premier objet de la présente invention se rapporte à un procédé d'agglomération de minerais de fer sur une bande, de préférence formée par une grille mobile sans fin, et de traitement des gaz issus dudit procédé, comprenant les opérations de :
- déposer sur la bande, sous forme d'une couche perméable, une charge comprenant un mélange de minerais de fer et de combustible solide ;
- enflammer ladite charge à sa surface supérieure à l'aide d'une hotte d'allumage ;
- aspirer un gaz comburant au travers de ladite charge, dans le sens de sa surface supérieure vers sa surface inférieure, pour faire progresser un front de combustion sur toute l'épaisseur de la couche formée par la charge, un gâteau aggloméré étant obtenu au terme de cette dernière opération ;
- recycler directement une partie des gaz collectés sous ladite charge en les réinjectant, avec le gaz comburant précité, au travers de la surface supérieure de la charge ;
- décharger de la bande ledit gâteau d'agglomération ;
caractérisé en ce que le procédé comprend en outre les opérations de :
- sécher une partie non recyclée des gaz collectés sous ladite charge ;
- faire subir une décarbonatation, c'est-à-dire une extraction du CO₂, aux gaz ayant subi l'opération précédente de séchage et
- injecter le flux résiduel de gaz après décarbonatation dans un réacteur métallurgique, par exemple de fusion réductrice, y compris un haut-fourneau ;
en ce que les gaz aspirés au travers de la charge comprennent, outre les gaz recyclés, de l'oxygène pur ou technique injecté à partir d'une source externe à l'installation d'agglomération et en ce que le taux de recyclage des gaz collectés sous la charge et la quantité en oxygène externe injecté au travers de la charge sont choisis pour obtenir une teneur en oxygène dans le flux résiduel de gaz après décarbonatation, injecté dans le réacteur de métallurgie, d'au moins 50%, de préférence au moins 80% et de préférence encore au moins 90%. Le procédé de l'invention permet de valoriser le surplus d'oxygène non consommé dans la combustion, sous forme d'un flux résiduel injecté dans un four métallurgique. L'homme de métier ne rencontrera alors aucune difficulté sortant de sa pratique routinière pour ajuster les différents flux de gaz dans le procédé, en effectuant un nombre limité d'essais, en vue d'atteindre la teneur souhaitée en oxygène dans le gaz résiduel injecté dans le four métallurgique.

Selon une modalité particulièrement préférée de l'invention, le flux résiduel des gaz non recyclés directement, séchés et ayant subi l'opération de décarbonatation est injecté aux tuyères d'un haut-fourneau.

En particulier, le haut-fourneau utilisé peut être du type "ULCOS" (variante principale), c'est-à-dire notamment à rejet réduit de CO₂ à l'atmosphère.

Au sein de ce type de haut-fourneau, on recycle une partie ou la majeure partie du gaz de gueulard après lui avoir fait subir une opération de condensation de la vapeur d'eau qu'il contient ainsi qu'une opération de décarbonatation. Il est particulièrement adapté pour être alimenté au niveau de ses tuyères essentiellement au moyen d'oxygène technique froid et de matières carbonées telles que du charbon pulvérisé. Pour le bon fonctionnement de ce type de haut-fourneau, il est essentiel que la teneur en azote injecté aux tuyères soit la plus faible possible.

Selon ce premier mode d'exécution préféré de l'invention, les flux de gaz peuvent alors être ajustés pour que la teneur en azote (et argon) du flux résiduel de gaz provenant du procédé d'agglomération et injecté dans le haut-fourneau soit inférieure à 10%, de préférence à 2%.

Toujours selon ce premier mode préféré de l'invention, au moins 90% voire la totalité du volume des gaz collectés sous la bande est récupéré soit dans le circuit de recyclage, soit dans le circuit de séchage, décarbonatation et injection dans le réacteur métallurgique.

De préférence, le volume de gaz résiduel injecté dans le réacteur métallurgique, exprimé dans les conditions normales de pression et température, est au moins 5 fois moindre que le volume total des gaz collectés sous la bande.

Un deuxième objet de la présente invention concerne un procédé d'agglomération de minerais de fer sur une bande, de préférence formée par une grille mobile sans fin, et de traitement des gaz issus dudit procédé, comprenant les opérations de :
- déposer sur la bande, sous forme d'une couche perméable, une charge comprenant un mélange de minerais de fer et de combustible solide ;
- enflammer ladite charge à sa surface supérieure à l'aide d'une hotte d'allumage ;
- aspirer un gaz comburant au travers de ladite charge, dans le sens de sa surface supérieure vers sa surface inférieure, pour faire progresser un front de combustion sur toute l'épaisseur de la couche formée par la charge, un gâteau aggloméré étant obtenu au terme de cette dernière opération ;
- recycler directement une partie des gaz collectés sous ladite charge en les réinjectant, avec le gaz comburant précité, au travers de la surface supérieure de la charge ;
- décharger de la bande ledit gâteau d'agglomération ;
caractérisé en ce que le procédé comprend en outre les opérations de :
- sécher la partie non directement recyclée des gaz collectés sous ladite charge ;
- faire subir une décarbonatation, c'est-à-dire une extraction du CO₂, aux gaz ayant subi l'opération précédente de séchage ;
- recycler le flux résiduel de gaz après décarbonatation par réinjection au travers de la surface supérieure de la charge ;
en ce que les gaz aspirés au travers de la charge comprennent, outre les gaz recyclés, de l'oxygène pur ou technique injecté à partir d'une source externe à l'installation d'agglomération et en ce que la quantité en oxygène externe injecté au travers de la charge est choisie pour obtenir une teneur en oxygène dans le flux résiduel des gaz non recyclés directement, séchés et ayant subi la décarbonatation, au moment de la réinjection dudit flux résiduel au travers de la surface supérieure de la charge, d'au moins 40%. L'homme de métier ne rencontrera non plus aucune difficulté sortant de sa pratique routinière pour ajuster les différents flux de gaz dans le procédé, en effectuant un nombre limité d'essais, en vue d'atteindre la teneur souhaitée en oxygène dans le gaz résiduel réinjecté au travers de la partie supérieure de la charge.

De préférence, le volume de gaz résiduel réinjecté au travers de la partie supérieure de la charge, exprimé dans les conditions normales de pression et température, est au moins 5 fois moindre que le volume total des gaz collectés sous la bande.

Selon ce mode d'exécution préféré, une purge des gaz est effectuée sous la charge, de préférence à hauteur de la hotte d'allumage, suivie d'un dépoussiérage et d'un renvoi à l'atmosphère, pour empêcher l'accumulation d'azote dans le procédé d'agglomération. De préférence cette purge ne représente pas plus de 10% du volume total des gaz collectés sous la charge.

Avantageusement, selon les deux modes d'exécution préférés, le flux résiduel des gaz non recyclés directement subit une opération de dépoussiérage fin et/ou d'élimination des SOₓ et/ou des métaux lourds et alcalins, préalable à l'opération de séchage et décarbonatation.

Egalement selon les deux modes d'exécution préférés, vu l'apport en oxygène externe le taux de recyclage des fumées peut être augmenté, par rapport à la situation de l'état de la technique, sans affecter sensiblement les performances de l'agglomération.

Toujours selon les deux modes d'exécution préférés, la partie des gaz non recyclée directement est avantageusement collectée sélectivement sous la charge, de préférence sous la seconde moitié ou le dernier tiers de la chaîne d'agglomération et subit un traitement complémentaire pour éliminer des polluants acides, par exemple à la chaux.

Enfin, selon l'invention, l'eau provenant du séchage de la partie non recyclée directement des gaz collectés sous la charge est récupérée par condensation. Une partie de cette eau est avantageusement utilisée comme appoint pour une opération de granulation de la charge avant dépose sur la bande.

### Brève description des figures

La figure 1 représente schématiquement un exemple des principaux flux gazeux correspondant au procédé d'agglomération amélioré selon une première forme d'exécution préférée de la présente invention pour la production d'une tonne d'aggloméré.

La figure 2 représente schématiquement un exemple des principaux flux gazeux correspondant au procédé d'agglomération amélioré selon une deuxième forme d'exécution préférée de la présente invention pour la production d'une tonne d'aggloméré.

### Description détaillée de l'invention

La présente invention est caractérisée par les modifications suivantes du procédé d'agglomération et du traitement des fumées qu'il génère :
- le gaz aspiré à travers la charge est constitué essentiellement de fumées recyclées et d'oxygène, pur ou technique ;
- les gaz après combustion dans la couche d'agglomération étant quasiment exempts d'azote, leurs composants principaux sont la vapeur d'eau, le dioxyde de carbone et l'oxygène, puis seulement et en beaucoup plus faibles proportions les polluants classiques de l'agglomération des minerais de fer cités plus haut ;
- le gaz non recyclé est séché par simple condensation. L'eau collectée peut partiellement et avantageusement être recyclée directement dans l'étape de granulation de la charge avant dépôt sur chaîne, cette étape nécessitant systématiquement un appoint d'eau ;
- après séchage, le gaz résiduel (riche en dioxyde de carbone) subit une opération de décarbonatation. Après celle-ci, il ne reste plus qu'un flux résiduel riche en oxygène (50 à 90%) et très faible en volume par rapport aux fumées d'agglomération obtenues sans recyclage des fumées (entre 30 et 400 Nm³ par tonne d'aggloméré contre typiquement 1800 à 2000 Nm³/tonne) ;
- plutôt que de dépolluer ce flux résiduel limité avant de l'envoyer à une quelconque cheminée, on injecte ce flux, principalement ou totalement, aux tuyères d'un haut-fourneau. Cela permet, dans un cas extrême, de supprimer totalement la cheminée de l'usine d'agglomération, ce qui constituerait une solution intéressante aux problèmes de pollution atmosphérique engendrés par la chaîne d'agglomération, et également de valoriser l'oxygène comme composant principal du flux gazeux résiduel et de se débarrasser des polluants résiduels sans transfert de pollution. En effet, les NOₓ sont supprimés à 100% dans les conditions réductrices de la zone à haute température du haut-fourneau, le soufre, essentiellement sous forme de SO₂ dans les fumées, se retrouvant quant à lui essentiellement dans le laitier du haut-fourneau et dans une beaucoup moindre mesure dans la fonte, les dioxines et autres composés organiques étant détruits thermiquement.

Par rapport à la problématique des gaz à effet de serre, le procédé permet avantageusement d'envisager une séquestration "économique" du CO₂, presque pur, retiré lors de l'étape de décarbonatation des fumées.

Le procédé de l'invention permet en outre d'économiser encore plus d'énergie que dans le cas du recyclage des fumées décrit dans l'état de la technique, car :
- le rendement de combustion du combustible solide est supérieur (rapport CO/CO₂ plus faible) grâce à un gaz aspiré à travers la charge :
   - riche en vapeur d'eau suite au recyclage poussé des fumées et à la quasi-absence d'azote,
   - éventuellement riche à souhait en oxygène selon le niveau d'appoint en oxygène pur ou technique, particulièrement dans la première mise en oeuvre préférentielle décrite ci-après ;
- le taux accru de recyclage des fumées correspond à un taux accru de récupération de chaleur in situ.

### Description de modes d'exécution préférés de l'invention

Une première modalité d'exécution particulièrement avantageuse de la présente invention sera décrite ci-dessous, en liaison avec une utilisation faisant intervenir un haut-fourneau à hautes performances en termes d'émission de CO₂ tel qu'un haut-fourneau du type de ceux qui font l'objet d'études dans le cadre du programme "ULCOS" (*Ultra Low CO₂ Steelmaking*). Le projet de recherche européen ULCOS implique la plupart des sidérurgistes européens, ainsi que des équipementiers, des centres de recherches et universités, etc. Il vise notamment à réduire drastiquement les émissions de CO₂, en particulier dans les hauts-fourneaux, en appliquant de nouvelles technologies pauvres en carbone aux configurations industrielles existantes, mais aussi à explorer des voies plus radicales qui pourraient servir à rediriger les investissements en sidérurgie dans l'ère post-Kyoto. Des exemples de technologies envisagées sont la capture et la séquestration du CO₂, une plus grande utilisation du méthane, de l'hydrogène et de la biomasse, les technologies utilisant l'électricité, etc.

Dans la technique de la variante principale d'un haut-fourneau dit de type "ULCOS", le gaz de gueulard est en grande partie recyclé après condensation de l'eau et décarbonatation, d'une part en bas de cuve, après réchauffage et/ou d'autre part aux tuyères, avec ou sans réchauffage, ce qui permet de mieux utiliser le potentiel réducteur des agents carbonés et d'en réduire substantiellement la consommation et partant l'émission de CO₂ par tonne de fonte produite. Une autre caractéristique de ce haut-fourneau est que le vent chaud (c'est-à-dire de l'air à environ 1150-1200°C) habituellement injecté aux tuyères est remplacé par de l'oxygène froid afin de minimiser les entrées d'azote (N₂) dans le système. L'azote a en effet tendance à s'accumuler dans le haut-fourneau du fait du recyclage du gaz de gueulard décarbonaté. Or toute teneur excessive en N₂ réduit de façon prohibitive la cinétique des réactions de réduction des oxydes de fer.

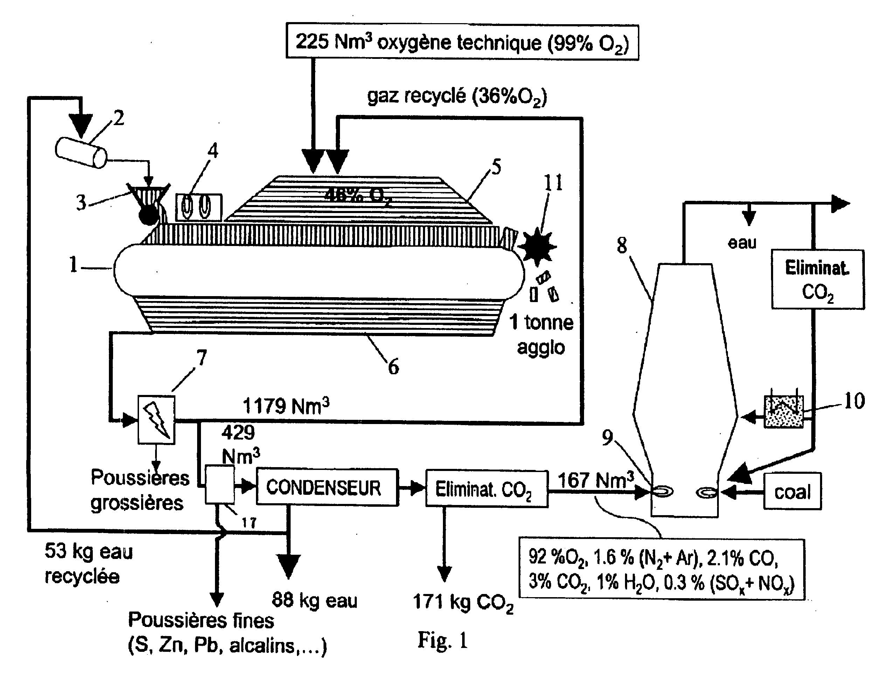

La figure 1 décrit schématiquement le résultat d'une simulation donnant les principaux flux gazeux mis en oeuvre à chaque étape du procédé pour obtenir une tonne d'aggloméré fini, dans le cas extrême où la totalité de l'oxygène nécessaire au haut-fourneau lui est apportée via le flux gazeux résiduel de l'agglomération, séché et décarbonaté.

L'installation pour la mise en oeuvre du procédé de l'invention comprend typiquement une bande d'agglomération 1 en amont de laquelle se trouve un granulateur 2 et une trémie de chargement 3 pour déposer sur la bande, sous forme d'une couche perméable, une charge de minerais et de combustible solide tel que poussier de coke ou charbon. La couche supérieure de cette charge est enflammée au niveau d'une hotte d'allumage 4. Les gaz recyclés et l'oxygène technique externe sont injectés au niveau de la surface supérieure de la bande au moyen d'une hotte de recyclage 5. L'ensemble des fumées est alors récupéré sous la bande via un collecteur de fumées ou système d'aspiration 6. Après filtration des poussières grossières dans un électrofiltre 7, une partie importante des gaz est recyclée par envoi dans la hotte de recyclage 5. Après une étape de désulfuration, par exemple par injection de poudre ou solution à base de chaux dans le flux gazeux, et passage dans un filtre performant 17 permettant l'élimination des poussières fines (sous-produits de la désulfuration, métaux lourds tels que zinc ou plomb, alcalins, etc.), la partie non recyclée des gaz collectés subit les étapes de séchage, décarbonatation et injection aux tuyères 9 d'un haut-fourneau 8. Dans celui-ci, la majeure partie des gaz de gueulard est recyclée en subissant les opérations successives de séchage et décarbonatation. Une fraction de ce gaz subit un réchauffage dans un réchauffeur 10 avant réinjection dans le bas de la cuve du haut-fourneau. L'autre fraction de ce gaz est recyclée aux tuyères du haut-fourneau avec ou sans réchauffage. Le gâteau d'agglomération est déchargé à l'extrémité de la bande 1 au niveau d'un concasseur de type "hérisson" 11. Une partie de l'eau obtenue par condensation lors du séchage des fumées d'agglomération non recyclées peut être utilisée comme appoint au granulateur 2.

Les gaz qui sont recyclés pour être injectés au travers de la couche d'agglomération contiennent 36% O₂, ce qui fait qu'au total le gaz comburant a une teneur de 46% en O₂, compte tenu de l'oxygène technique ajouté. Après séchage et décarbonatation, la quantité de gaz déviée vers l'alimentation du haut-fourneau correspond dans l'exemple à peu près à 1/10^{ème} de la quantité totale des gaz collectés sous la chaîne d'agglomération. La composition du gaz d'alimentation du haut-fourneau est dans ce cas : 92% O₂, 1,6% (N₂+Ar), 2,1% CO, 3% CO₂, 1% H₂O et 0,3% (SOₓ+NOₓ).

Le nouveau procédé d'agglomération décrit plus haut présente une synergie toute particulière avec la variante principale du haut-fourneau ULCOS, car ce dernier consomme beaucoup plus d'oxygène (sous forme pure ou technique) que le haut-fourneau classique. Si tout ou partie de cet oxygène est amené via le gaz résiduel de l'agglomération, après séchage et décarbonatation, cela permet de travailler à l'agglomération de façon économiquement viable à des teneurs en oxygène dans le gaz aspiré au travers de la charge nettement au-delà de ce qui est pratiqué aujourd'hui, c'est-à-dire jusqu'à 30-50% contre seulement 21% en agglomération conventionnelle sans recyclage des fumées et 15 à 18% en cas de recyclage "classique". Cela se fait sans aucun gaspillage d'oxygène puisque le flux résiduel n'est pas rejeté à la cheminée, mais bien totalement valorisé au haut-fourneau. Cela permet de supprimer totalement les effets néfastes du recyclage des fumées sur les performances d'agglomération. On peut même s'attendre à des gains substantiels de productivité, vu la teneur élevée en oxygène et la chaleur spécifique élevée des gaz aspirés à travers la couche.

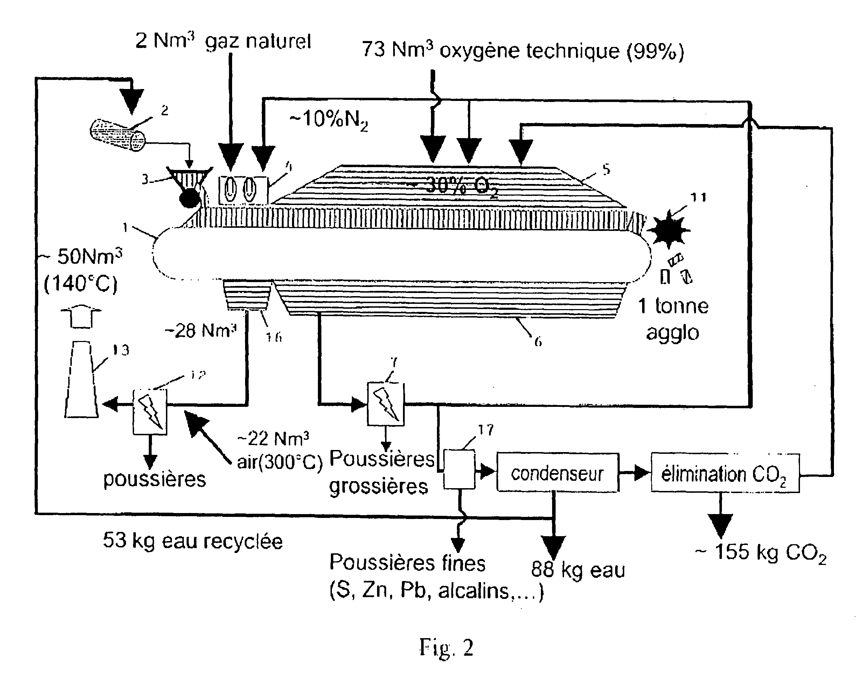

La figure 2 correspond à une variante de la simulation décrite dans la figure 1. La partie des gaz récupérés au collecteur de fumées 6, non recyclée dans un premier temps et ayant subi les étapes de dépoussiérage grossier et fin, séchage et décarbonatation est riche en O₂ (> 40%). Il est très avantageux de renvoyer ce gaz résiduel au niveau de la hotte de recyclage 5 pour l'utiliser dans le procédé d'agglomération. Ceci permet de réduire fortement la quantité d'oxygène technique exogène à injecter pour produire la même quantité d'aggloméré fini (dans l'exemple représenté sur les figures 1 et 2, 73 Nm³ au lieu de 225 Nm³ d'oxygène technique). D'autre part, dans cette modalité également préférée de l'invention, on prévoit une purge de gaz 16, c'est-à-dire essentiellement de l'air ou de l'azote, directement en dessous du gâteau d'agglomération, à la hauteur de la hotte d'allumage 4. Après un dépoussièrage 12 permettant d'éliminer certains polluants, ces gaz de purge sont envoyés à l'atmosphère par une cheminée 13. Cette dernière opération de purge a pour but d'éviter l'accumulation d'azote dans le procédé.

D'autres variantes du procédé peuvent également s'avérer avantageuses. Sur la figure 1, on voit que le collecteur de fumées 6 est réparti sur toute la longueur de la chaîne d'agglomération. Comme les fumées générées sont les plus polluées dans la deuxième partie de la chaîne d'agglomération, on effectuera avantageusement un prélèvement sélectif des fumées sous la seconde moitié, de préférence sous le dernier tiers, de la chaîne d'agglomération pour leur faire subir un traitement complémentaire à la chaux, avant séchage, décarbonatation et recyclage. Ceci permet d'accumuler beaucoup moins, voire pas du tout, de polluants acides et corrosifs tels que SOₓ et HCl dans la boucle de recyclage des gaz au cours du temps.

## Revendications

1. Procédé d'agglomération de minerais de fer sur une bande, de préférence formée par une grille mobile sans fin, et de traitement des gaz issus dudit procédé, comprenant les opérations de :
- déposer sur la bande, sous forme d'une couche perméable, une charge comprenant un mélange de minerais de fer et de combustible solide ;
- enflammer ladite charge à sa surface supérieure à l'aide d'une hotte d'allumage ;
- aspirer un gaz comburant au travers de ladite charge, dans le sens de sa surface supérieure vers sa surface inférieure, pour faire progresser un front de combustion sur toute l'épaisseur de la couche formée par la charge, un gâteau aggloméré étant obtenu au terme de cette dernière opération ;
- recycler une première partie des gaz collectés sous ladite charge en les réinjectant, avec le gaz comburant précité, au travers de la surface supérieure de la charge, les gaz aspirés au travers de la charge comprenant, outre les gaz recyclés, de l'oxygène pur ou technique injecté à partir d'une source externe à l'installation d'agglomération ;
- purger une deuxième partie des gaz collectés sous ladite charge et renvoi de celle-ci à l'atmosphère ;
- décharger de la bande ledit gâteau d'agglomération ; **caractérisé en ce que** le recyclage des gaz collectés sous la charge se subdivise en un recyclage direct et un recyclage indirect, ce dernier comprenant les opérations de :
- sécher la partie non directement recyclée des gaz collectés sous ladite charge ;
- faire subir une décarbonatation, c'est-à-dire une extraction du CO₂, aux gaz ayant subi l'opération précédente de séchage ;
- recycler le flux résiduel de gaz après décarbonatation par réinjection au travers de la surface supérieure de la charge ;
de manière telle que la quantité en oxygène externe injecté au travers de la charge et la proportion de gaz directement recyclé et indirectement recyclé sont choisies pour obtenir une teneur en oxygène dans le flux résiduel des gaz non recyclés directement, séchés et ayant subi la décarbonatation, au moment de la réinjection dudit flux résiduel au travers de la surface supérieure de la charge, d'au moins 40%.

2. Procédé selon la revendication 1, **caractérisé en ce que** les gaz sont collectés sélectivement sous la charge, de préférence sous la seconde moitié ou le dernier tiers de la chaîne d'agglomération et subissent un traitement complémentaire pour éliminer des polluants acides, par exemple à la chaux.

3. Procédé selon la revendication 1, **caractérisé en ce que** ladite purge des gaz est effectuée sous la charge, de préférence à hauteur de la hotte d'allumage, suivie d'un dépoussiérage et d'un renvoi à l'atmosphère, pour empêcher l'accumulation d'azote dans le procédé d'agglomération.

4. Procédé selon la revendication 1, **caractérisé en ce que** le volume de gaz résiduel réinjecté au travers de la partie supérieure de la charge, exprimé dans les conditions normales de pression et température, est au moins 5 fois moindre que le volume total des gaz collectés sous la bande.

5. Procédé selon l'une quelconque des revendications précédentes, **caractérisé en ce que** le flux résiduel des gaz non recyclés directement subit une opération de dépoussiérage fin et/ou d'élimination des SOₓ et/ou des métaux lourds et alcalins, préalable à l'opération de séchage et décarbonatation.

6. Procédé selon l'une quelconque des revendications précédentes, **caractérisé en ce qu'**une partie de l'eau provenant de l'opération de séchage des gaz est utilisée comme appoint pour une opération de granulation de la charge avant dépose sur la bande.

7. Procédé selon l'une quelconque des revendications précédentes, **caractérisé en ce que** l'eau provenant du séchage de la partie non recyclée directement des gaz collectés sous ladite charge est récupérée par condensation.

## Claims

1. Process for agglomerating iron ores on a belt, preferably formed by an endless moving grid, and for processing the gases resulting from said process, comprising the operations of:
- depositing on the belt, in the form of a permeable layer, a charge comprising a mixture of iron ores and solid fuel;
- igniting said charge on its upper surface by means of an ignition hood;
- sucking an oxidising gas through said charge, in the direction from its upper surface towards its lower surface, so as to cause a combustion front to progress through the entire thickness of the layer formed by the charge, an agglomerated cake being obtained at the end of this latter operation;
- recycling a first portion of the gases collected below said charge by re-injecting them, with the aforementioned oxidising gas, through the upper surface of the charge, the gases sucked through the charge comprising, in addition to the recycled gases, pure or technical oxygen injected from a source that is external to the agglomeration installation;
- purging a second portion of the gases collected below said charge and returning them into the atmosphere;
- discharging said agglomeration cake from the belt; **characterised in that** the recycling of the gases collected below the charge is subdivided into a direct recycling and an indirect recycling, the latter comprising the operations of:
- drying the non-directly recycled portion of the gases collected below said charge;
- causing the decarbonation, i.e. extraction of CO₂, of the gases that have undergone the preceding drying operation;
- recycling the residual stream of gases after decarbonation by re-injecting it through the upper surface of the charge;
so that the quantity of external oxygen that is injected through the charge and the proportion of directly and indirectly recycled gas are selected so as to obtain an oxygen content of at least 40% in the residual stream of the gases that are non-directly recycled and dried and that have decarbonated at the time when said residual stream is re-injected through the upper surface of the charge.

2. Process according to Claim 1, **characterised in that** the gases are selectively collected below the charge, preferably under the second half or the last third of the agglomeration chain, and undergo an additional treatment in order to eliminate acidic pollutants, for example containing lime.

3. Process according to Claim 1, **characterised in that** said purging of the gases is carried out below the charge, preferably at the same height as the ignition hood, followed by a dust extraction and a return into the atmosphere, so as to prevent the accumulation of nitrogen in the agglomeration process.

4. Process according to Claim 1, **characterised in that** the volume of residual gas re-injected through the upper part of the charge, expressed under normal pressure and temperature conditions, is at least 5 times less than the total volume of gases collected below the belt.

5. Process according to any one of the preceding claims, **characterised in that** the residual stream of non-directly recycled gases undergoes an operation of fine dust extraction and/or removal of SOₓ and/or of heavy and alkali metals, prior to the drying and decarbonation operation.

6. Process according to any one of the preceding claims, **characterised in that** a portion of the water coming from the drying operation of the gases is used as make-up water for a granulating operation of the charge before it is deposited on the belt.

7. Process according to any one of the preceding claims, **characterised in that** the water coming from the drying of the non-directly recycled portion of the gases collected below said charge is recovered by condensation.

## Patentansprüche

1. Verfahren zur Agglomeration von Eisenerzen auf einem Band, vorzugsweise gebildet aus einem beweglichen Endlosgitter, und zur Behandlung der Gase, die aus diesem Verfahren stammen, umfassend die folgenden Vorgänge:
- Ablegen einer Ladung, umfassend eine Mischung aus Eisenerzen und festem Brennstoff, in Form einer durchlässigen Schicht, auf dem Band;
- Entflammen der Ladung auf ihrer oberen Fläche mit Hilfe einer Entzündungshaube;
- Ansaugen eines Brennstoffgases über die Ladung in Richtung ihrer oberen Fläche hin zu ihrer unteren Fläche, um eine Brennlinie über die ganze Dicke der Schicht, gebildet aus der Ladung, fortschreiten zu lassen, wobei am Ende dieses letzten Vorgangs ein agglomerierter Kuchen erhalten wird;
- Recyceln eines ersten Teils der Gase, die unter der Ladung gesammelt wurden, indem sie, mit dem oben angegebenen Brennstoffgas, über die obere Fläche der Ladung wieder injiziert werden, wobei die über die Ladung angesaugten Gase, außer den recycelten Gasen, reinen oder technischen Sauerstoff enthalten, der von einer externen Quelle in die Agglomerationseinrichtung injiziert wurde;
- Abblasen eines zweiten Teils der Gase, die unter der Ladung gesammelt wurden, und Rücksendung dieser in die Atmosphäre;
- Entladen des Agglomerationskuchens vom Band;
**dadurch gekennzeichnet, dass** sich das Recycling der Gase, die unter der Ladung gesammelt wurden, in ein direktes Recycling und ein indirektes Recycling unterteilt, wobei letzteres die folgenden Vorgänge umfasst:
- Trocknen des nicht direkt recycelten Teil der Gase, die unter der Ladung gesammelt wurden;
- Veranlassen einer Entkarbonisierung, d.h. einer Extraktion des CO₂ aus den Gasen, die dem vorherigen Vorgang des Trocknens unterzogen wurden ;
- Recyceln des restlichen Gasflusses nach der Entkarbonisierung durch erneute Injektion über die obere Fläche der Ladung;
so dass die Menge an externem Sauerstoff, die über die Ladung injiziert wird, und das Verhältnis zwischen direkt recyceltem Gas und indirekt recyceltem Gas gewählt werden, um einen Sauerstoffgehalt im restlichen Fluss der nicht direkt recycelten, getrockneten und der Entkarbonisierung unterzogenen Gase im Augenblick der erneuten Injizierung des restlichen Flusses über die obere Fläche der Ladung von zumindest 40 % zu erhalten.

2. Verfahren nach Anspruch 1, **dadurch gekennzeichnet, dass** die Gase selektiv unter der Ladung gesammelt werden, vorzugsweise unter der zweiten Hälfte oder dem letzten Drittel der Agglomerationskette, und einer zusätzlichen Behandlung unterzogen werden, um saure Verunreinigungen, z.B. den Kalk, zu beseitigen.

3. Verfahren nach Anspruch 1, **dadurch gekennzeichnet, dass** das Ablassen der Gase unter der Ladung durchgeführt wird, vorzugsweise auf der Höhe der Entzündungshaube, gefolgt von einer Entstaubung und einem Zurückschicken an die Atmosphäre , um die Ansammlung von Stickstoff im Agglomerationsverfahren zu verhindern.

4. Verfahren nach Anspruch 1, **dadurch gekennzeichnet, dass** das Volumen des restlichen Gases, das über den oberen Teil der Ladung erneut injiziert wird, ausgedrückt unter den normalen Druck- und Temperaturbedingungen, zumindest 5 Mal geringer ist als das Gesamtvolumen der Gase, die unter dem Band gesammelt werden.

5. Verfahren nach einem der vorhergehenden Ansprüche, **dadurch gekennzeichnet, dass** der restliche Fluss der nicht direkt recycelten Gase einem Vorgang der feinen Entstaubung und/oder der Beseitigung von SOx und/oder der Schwermetalle und Alkalimetalle vor dem Vorgang des Trocknens und der Entkabonisierung unterzogen wird.

6. Verfahren nach einem der vorhergehenden Ansprüche, **dadurch gekennzeichnet, dass** ein Teil des Wassers, das vom Vorgang des Trocknens der Gase stammt, als Unterstützung für einen Vorgang der Granulierung der Ladung vor der Ablage auf dem Band verwendet wird.

7. Verfahren nach einem der vorhergehenden Ansprüche, **dadurch gekennzeichnet, dass** das Wasser, das vom Trockenen des nicht direkt recycelten Teils der Gase stammt, die unter der Ladung gesammelt wurden, durch Kondensation wiedergewonnen wird.
